# EUROPEAN PATENT APPLICATION

(11) **EP 1 905 555 A1**
(43) Date of publication of application: **02.04.2008**
(21) Application number: 07013791.4
(22) Date of filing: 13.07.2007
(51) Int. Cl.: B26D 3/06, B26B 5/00, B29C 65/00, E04F 21/22

(54) **Floor coving groover**

(30) Priority: 29.09.2006 US 529077
(71) Applicant: Martinez, Leo, Buena Park, CA 90621 (US)
(72) Inventor: Martinez, Leo, Buena Park, CA 90621 (US)
(74) Representative: Lehmann, Alexander

(57) **Abstract**

A flooring grooving tool is provided which facilitates the cutting of grooves in the surfaces of abutting sheets of linoleum and other sheet material flooring, particularly in the coving areas where the flooring sheets are curved upwardly along the walls. The tool has an elongated handle bent to delineate a larger handgrip portion from a smaller mounting end. A cutting blade mount projects from the blade mounting end of the handle and receives a U-shaped cutting blade. A hairpin bend in the cutting blade is sharpened at both edges so that the blade can cut in either direction. A planar guide fin is formed on the cutting blade mount and is located at the grooving tunnel formed between hairpin bend in the cutting blade and the cutting blade mount. The guide fin fits into the crevice between adjacent sheets of flooring to be grooved to a depth limited by the flat floor contact surfaces on the cutting blade mount. The floor contact surfaces aid in maintaining the cutting blade at a uniform angle relative to the flooring surfaces.

## Description

### BACKGROUND OF THE INVENTION

### Field of the Invention

The present invention relates to a floor coving grooving tool that is utilized to create grooves at seams between sheets of linoleum flooring which are later filled with sealant to seal, the linoleum flooring sheets together.

### Description of the Prior Art

At present, sheets of homogeneous, elastic, PVC, solid vinyl, linoleum, rubberized plastic, or similar flooring are provided in large rolls which can be unrolled at the job site. Such sheets of flooring are typically utilized in hospitals, particularly in surgical areas, as well as in floors of other types of rooms. Such sheets are also used in other types of public buildings, including industrial and commercial buildings. This type of flooring is sometimes used in residential building construction. Smaller sheets in the form of large tiles, one meter square, are also utilized in the same types of applications.

While in some cases the width of the sheets of the flooring are at least as great as one dimension of the room of the floor to be covered, this is often not the case. In such situations the floor covering can be completed only by positioning and butting together two or more sheets of flooring at their edges.

The flooring sheets are secured to the floor by an adhesive compound. To secure the flooring sheets the compound is applied to the floor and the cut sheets of flooring are laid in position, one by one. Once each sheet of flooring is laid, the next adjacent flooring sheet is brought into position and pressed against the floor with the linear edges of adjacent flooring sheets residing in mutual lateral abutment.

One major problem with laying sheets of flooring in this manner is that the adhesive bond between the underside of the flooring sheets and the subfloor beneath is sometimes inadequate. Quite often areas of the sheets of the flooring will tend to separate from the subfloor when the adhesive bond between the subfloor and the flooring sheets deteriorates due to age, movement of the subfloor, or improper installation.

The separation of areas of flooring sheets from the subfloor is particularly pronounced at the interfaces between adjacent sheets of flooring. The edges of adjacent sheets of flooring which are supposed to reside in firm, mutual abutment, will sometimes tend to rise from the subfloor. Such debonding presents both a dangerous condition and an unsightly appearance. It also leads to a significant deterioration of the floor because of the separation that occurs when the edges of adjacent sheets of flooring rise. When the edges of sheets of flooring separate from the subfloor in this way, moisture and debris often find their way into the crack that forms between the flooring sheets, thus leading to a further deterioration of the flooring. This also creates a condition in which bacteria can thrive, which is highly undesirable in a hospital or kitchen environment.

In the floor installation trade the use of fusible plastics to form a seal between the abutting edges of adjacent sheets of flooring has gained increased popular acceptance. According to one technique the edges of sheets of flooring are not cut perpendicular to the plane of the expanse of the flooring as has historically been the practice. Rather, the edges of the flooring are cut so that adjacent sheets of flooring, when moved into abutting relationship, define an upwardly facing, elongated groove where they meet. A fusible plastic sealant is then laid down in this groove or channel in a molten form and then is allowed to cool. Once the fusible plastic sealant solidifies, it adheres to the abutting edges of the flooring sheets and to the concave or upwardly facing surfaces of the adjacent flooring sheets at the demarcation therebetween.

The fused plastic sealant aids in holding the abutting edges of the adjacent sheets of flooring together and prevents moisture and dirt from entering into the junction between the abutting edges of the flooring sheets. Plastic sealants of this type are colored to blend in with the color of the flooring sheets, in most cases, so that the seams between the adjacent flooring sheets are not readily apparent. The fused plastic sealant thereby serves both as an additional measure of protection of the flooring seams from damage, and also as an aesthetically pleasing manner of concealing seams between adjacent flooring sections.

While cutting of the flooring at an angle to form a groove between adjacent sections of flooring represents one method of creating the groove necessary to receive fusible plastic sealant at seams between flooring sections, other devices exist for creating such grooves as well. There are conventional tools that are utilized to form grooves for receiving plastic sealant at abutting edges between flooring sections. One such tool is sold as the Forbo-Groover, one version of which is illustrated in European Patent No. EP 0 297 684. This tool is a hand-operated device that employs a U-shaped gouge located at or near the rear of the device and guided by a pair of spurs, one located at the forward end of the tool and the other at the rear of the tool. One principal difficulty with this prior, convention tool is that the user is only able to form a groove up to about eighteen centimeters away from a vertical abutment surface, such as a wall or cabinet base. Therefore, the installer is left with a problem in that the final distance of about eighteen centimeters cannot easily be grooved.

A very similar conventional device is sold by a German firm, Janser GmbH, as the "Wheeled Super Groover". However, this device presents the installer with essentially the same problem. That is, the installer can form a groove only up to about thirteen centimeters from a wall or cabinet. To complete the groove all the way to the vertical surface the installer must utilize a very simple, but imprecise, hand-held grooving blade on a projecting arm. Such a hand-held device offers no guidance and no control over either the depth or straightness of the groove.

A superior device is sold by Martinez Enterprises as the #19 Master Turbo Groover. This device does groove all the way up to a vertical wall, but still leaves end grooving unfinished at coving that curves up onto walls from floors.

Electrically operated grooving machines are also available. For example, Janser GmbH sells grooving machines of this type as Models TFU 1000 and TFU 600. However, these electrically operated devices are considerably more expensive than hand-operated tools, and can form grooves in flooring only up to about thirty centimeters from the wall or other vertical abutment. Thus, in all cases the installer must finish the job of grooving at the seams with an imprecise, hand-held grooving blade.

There are small handheld floor seam grooving tools available that are designed to form grooves at seams in flooring up to a wall surface. Martinez Enterprises sells the #9 Rubber Hand Groover for this propose. Other handheld grooving devices have been offered for sale by the German firm Janser GmbH as the AltroType Super Adjustable Groover 111, the Special Adjustable Groover, the Standard Grooving Tool, and the P-type Groover. Similar handheld tools are also available. However, all of these conventional handheld floor grooving tools are quite difficult to keep in proper alignment when attempting to create seams in coving. Floor coving is the portion of the linoleum flooring that is turned upwardly in a concave arcuate radius at the intersection between the floor and a wall so as to avoid sharp, right angle corners in which dirt, grime, and dust are likely to collect. When an installer utilizes a conventional handheld tool of the type described in creating grooves in floor coving, it is extremely difficult to maintain the grooving blade in proper alignment with the demarcation between the abutting sheets of flooring and to create a groove of uniform depth.

### SUMMARY OF THE INVENTION

The present invention is a handheld floor grooving tool that is particularly useful for creating grooves at the curved floor coving at which abutting sheets of linoleum meet. The tool of the invention is uniquely configured so that the blade can be easily kept in linear alignment with the demarcation at the interface between the abutting sheets of linoleum flooring. Unlike conventional handheld tools the grooving tool of the present invention will properly follow the demarcation and will not tend to twist or wander from the interface between abutting sheets of flooring at the curved coving.

The important feature of the invention that facilitates proper alignment of the cutting blade is a guide fin that is positioned immediately adjacent the entrance to the cutting tunnel created by the U-shaped grooving blade of the floor grooving tool. The guide fin is extremely narrow so that it fits into and slides along the crevice at the interface between abutting sheets of linoleum flooring. While other conventional tools also have comparable guides, the guide fins of conventional tools, if they are provided at all, are located some distance from the cutting blade. As a result, while the guide may follow the interface between sheets of abutting flooring, the cutting blade does not necessarily follow the direct path of the guide unless the flooring installer is extremely skillful. As a consequence, the floor grooving tool of the present invention is much easier to use to create grooves in sheets of abutting flooring, particularly in the coving areas at the intersection between the floor and wall of a room.

A further highly advantageous feature of the present invention is the provision of flat floor contact surfaces on both sides of the guide fin. These flat floor contact surfaces ensure that the guide fin remains in an upright orientation perpendicular to the exposed surfaces of the abutting sheets of flooring and that the depth of the groove created is uniform. Both the guide fin and the cutting blade are rigidly secured together so that the proper upright orientation of the guide fin relative to the flooring surface of contact ensures that the cutting blade is not laterally angled to one side or the other, but also maintains an upright orientation.

Furthermore, the flat floor contact surfaces on both sides of the guide fin limit the depth to which the guide fin enters the crevice between the two abutting sheets of flooring and thereby also ensures the uniformity of the depth of the groove created by the cutting blade. That is, the user presses the tool against the floor with the floor contact surfaces on either side of the guide fin pressed against the facing surfaces at the edges of the flooring sheets. The flat floor contract surfaces if the tool ensure that the cutting blade maintains a specific angle of orientation and depth of cut of the groove into the flooring. Unlike conventional handheld grooving tools the grooving tool of the present invention prevents a groove from being cut too deeply or too shallow and also ensure that the edges of the mutually abutting sheets of flooring are grooved evenly.

A further important feature of the invention is the provision of an inscribed linear indicia on the mounting structure for the cutting blade. This linear indicia aids the user in maintaining the precise alignment of the tool with the seam between flooring sheets so that it precisely follows the demarcation at the interface between the abutting edges of the sheets of flooring.

In one broad aspect the present invention may be considered to be a grooving tool for cutting grooves in the surfaces of abutting sheets of flooring at linear interfaces therebetween. The tool of the invention is comprised of a longitudinally aligned, elongated handle, a cutting blade mount, a cutting blade, and a planar guide fin. The elongated handle has a handgrip for manual gripping by a hand of a user. One of the ends of the handle is a blade mounting end. The cutting blade mount projects linearly from the blade mounting end of the handle and has opposing faces parallel to the alignment of the handle. The cutting blade has a U-shaped cross section with opposing legs disposed against and secured to the opposing faces of the cutting blade mount. A grooving tunnel is thereby defined between the cutting blade and the cutting blade mount. The guide fin is located at the grooving tunnel and is oriented parallel to and midway between the opposing legs of the cutting blade.

The planar guide fin longitudinally bisects one end of the grooving tunnel, specifically the entrance end, at which the blade scoops out the groove from the adjacent edges of abutting sheets of flooring. The cutting blade is preferably removably secured to the cutting blade mount and has sharp, opposing edges at both of its U-shaped ends so that the blade can be reversed on the cutting blade mount at the election of the user.

The cutting blade mount is preferably inscribed with a linear indicia longitudinally bisecting its structure so as to provide a visual reference for alignment of the guide fin with the linear interfaces between the sheets of abutting flooring. This visual reference indicia serves as an aid to the user to maintain the tool in precise longitudinal alignment with the interfaces between the sheets of abutting flooring.

The cutting blade mount preferably has at least one angled corner to provide flat floor contact surfaces on the cutting blade mount on both sides of the guide fin. The guide fin is thereby insertable into the interfaces between the abutting sheets of flooring in such a manner that the flat floor contact surfaces of the cutting blade mount reside in face to face contact with the surfaces of the abutting sheets of flooring. This feature ensures proper upright alignment of the cutting blade and also a specific, uniform depth of cut of the groove as limited by the depth of penetration of the guide fin into the crevice between adjacent sheets of flooring.

Preferably the handle of the tool is bent so that the blade mounting end thereof is aligned at an obtuse angle relative to the handgrip. This bend in the handle provides a convenient thumb support at the blade mounting end of the handle and also improves the ability of the user to observe the cutting blade and the groove created by it. The obtuse angle of the elbow or bend in the handle is preferably about one hundred fifty degrees.

In another broad aspect the present invention may be considered to be a floor covering grooving tool comprising a longitudinally oriented handle having a blade mounting end and a handgrip, a flat blade mount projecting from the blade mounting end, a strip of metal having sharp cutting edges and bent into a U-shaped configuration to form a cutting blade, and a flat, narrow guide fin. The flat blade mount projects from the blade mounting end of the handle and has mutually opposing flat blade mounting faces. The U-shaped strip of metal forming the cutting blade has mutually opposing legs mounted against the flat blade mounting faces of the blade mount to thereby form a U-shaped cutting tunned with the blade mount. That is, the opening formed by the hairpin, U-shaped loop in the metal strip forming the cutting blade and the structure of the cutting blade mount is a rounded, tunnel-shaped opening that creates a corresponding groove having a curved, generally semicircular cross section. The flat, narrow guide fin is secured to the blade mount at the U-shaped cutting tunnel. The guide fin resides equidistant from the opposing legs of the cutting blade and in longitudinal alignment with the handle.

The guide fin is located at the entrance to the cutting tunnel. That is, the tool is moved in a direction with the guide fin preceding and located immediately in front of the cutting blade in its path of movement. The handle is bent so that the blade mounting end thereof forms an obtuse angle relative to one side of the handgrip and a reflex angle relative to an opposite side of the handgrip. The guide fin in located on the blade mount nearest the opposite side of the handgrip, that is, the side at which the reflex angle is formed in the handle.

The cutting blade mount preferably has an angled corner that defines flat floor contact surfaces on both sides of the guide fin. The guide fin is oriented perpendicular to the floor contact surfaces and is centered therebetween. The floor contact surfaces thereby define a plane of floor contact. The cutting blade is firmly secured to the blade mount so that the cutting tunnel is inclined preferably at an angle of about thirty degrees relative to the plane of floor contact.

The guide fin is preferably formed of stainless steel and is no greater than about 0.5 millimeters in thickness and preferably projects from the plane of floor contact a distance no greater than about three millimeters. The size and location of the guide fin ensures that the cutting blade is oriented relative to the adjacent surfaces of the abutting sheets of flooring so as to create a groove at the floor seam that has a specific depth designed to accommodate sealant strips of a particular size that are subsequently melted into the groove.

The cutting blade is configured so that the grooving tunnel has a tunnel opening of uniform cross section throughout. The tunnel opening may be about three millimeters wide and about three millimeters high.

The handle has an elbow bend in it delineating the handgrip from the blade mounting end of the handle. The blade mounting end projects from the handgrip at an angle of about forty degrees from alignment relative thereto. The tunnel opening has a uniform cross section throughout. Preferably the strip of metal forming the cutting blade is about one centimeter in width, so that the grooving tunnel has a length equal to about one centimeter.

The guide fin is located at an angled corner of the blade support mounting plate. The angled corner forms the flat floor contact surfaces in mutually coplanar alignment with each other and in perpendicular alignment relative to the guide fin. Preferably the floor contact surfaces are each about three millimeters in length and about two millimeters in width. The floor contact surfaces preferably reside at an angle of about thirty degrees relative to the alignment of the blade mounting end of the handle.

In still another broad aspect the invention may be considered to be a tool for forming grooves in coving at abutting, upturned surfaces of sheets of flooring having edges that abut each other at a linear demarcation therebetween. The tool is comprised of a handle, a flat blade support mounting plate, a grooving blade, and a flat, narrow guide fin. The handle is longitudinally aligned and has a handgrip and a blade mounting end projecting from the handgrip. The flat blade support mounting plate projects longitudinally from the blade mounting end of the handle and has opposing, mutually parallel side faces.

The flat, blade support mounting plate projects longitudinally from the blade mounting end of the handle and has opposing, mutually parallel side faces. The grooving blade is formed into a U-shaped configuration with opposing legs respectively residing in contact with the opposing side faces of the blade support mounting plate. Together, the grooving blade and the blade support mounting plate form a grooving tunnel.

The guide fin is secured to the blade support mounting plate immediately adjacent the grooving tunnel. The guide fin is oriented parallel to and equidistant from the opposing legs of the grooving blade. The guide fin defines a longitudinal, bifurcating center plane through the blade mount. Preferably the blade mount is inscribed with linear indicia for following the bifurcating center plane so as to form a visual guide reference for aligning the handle relative the demarcation between the sheets of flooring.

The invention may be described with greater clarity and particularity by reference to the accompanying drawings.

### DESCRIPTION OF THE DRAWINGS

Fig. 1 is an exploded perspective view illustrating the handheld floor seam grooving tool of the invention.
Fig. 2 is a side elevational view illustrating use of the tool to form grooves in the edges of the coving areas of abutting sheets of flooring.
Fig. 3 is a bottom plan detail view illustrating a portion of the grooving tool of the invention.
Fig. 4 is a detail view taken along the lines 4-4 of the Fig. 3.
Fig. 5 illustrates an alternative manner of use of the tool of the invention to that shown in Fig. 2.
Fig. 6 is a top plan view illustrating use of the tool as shown from above in Fig. 2.

### DESCRIPTION OF THE EMBODIMENT

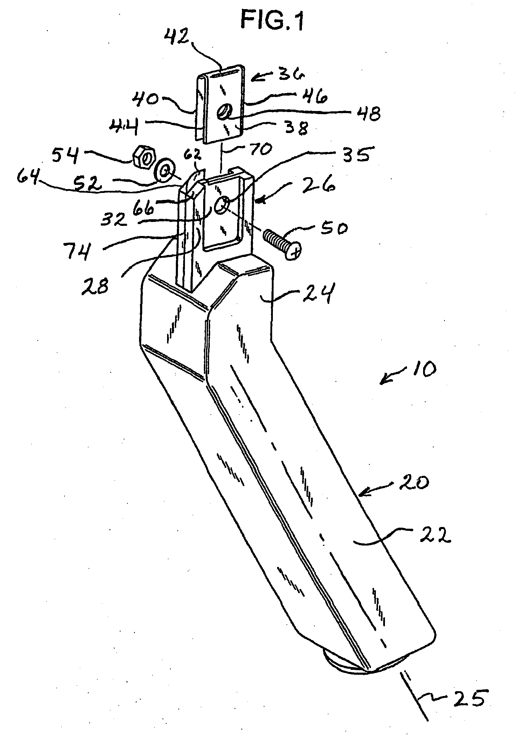

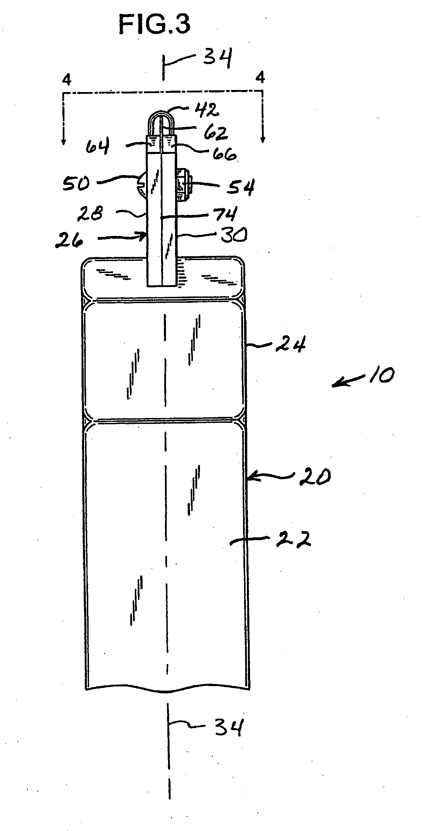

Fig. 1 illustrates a grooving tool 10 for cutting grooves 19 in the concave, upwardly curved coving surfaces 12 of abutting sheets of flooring 14 and 16 at a linear interface 18 therebetween. The grooving tool 10 is provided with an elongated, hard rubber handle 20 having a handgrip portion 22 for manual gripping by the hand of a user and having an opposite blade mounting end 24. A cutting blade mount 26 projects linearly from the blade mounting end 24 of the handle 20. The cutting blade mount 26 is preferably formed of a plate of stainless steel about sixty millimeters in width and has opposing faces 28 and 30, each of which has a generally rectangular blade seating pocket 32 defined therein. A transverse blade mounting aperture 35 is defined through the cutting blade mount 26 at about the centers of the blade seating pockets 32. The opposing faces 28 and 30 of the cutting blade mount 26 are oriented parallel to the alignment of the handle 20. The handle 20 may be considered to be aligned along a longitudinal, bifurcating center plane 34, indicated in Figs. 3, 4, and 6.

The cutting blade mount 26 supports a cutting blade 36 formed of a strip of stainless steel about thirty-six millimeters in length and about twelve millimeters in width, which is bent into a U-shaped cross section. The cutting blade has opposing legs 38 and 40 joined together by an arcuately curved, hairpin bend center portion 42.

Both of the long edges 44 and 46 of the metal strip forming the cutting blade 36 are sharpened, so that the U-shaped hairpin bend portion 42 can cut in either direction. Mounting apertures 48 are defined through both of the blade legs 38 and 40 so that they reside in registration with the mounting aperture 35 in the cutting blade mount 26. The pair of flat blade legs 38 and 40 of the cutting blade 36 fit into the seating pockets 32 to embrace the opposing faces 28 and 30 of the cutting blade mount 26.

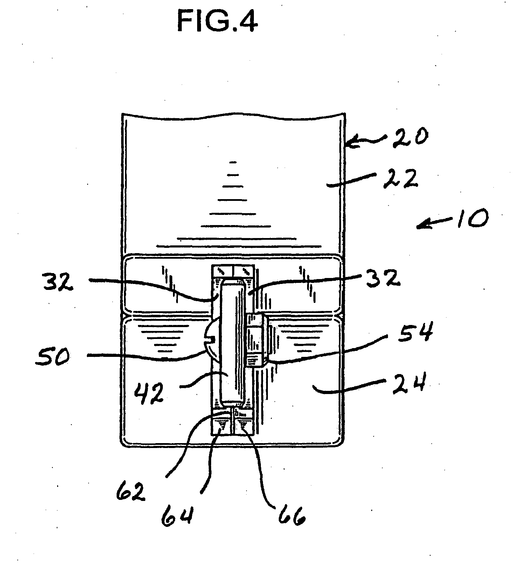

The cutting blade 36 is releaseably attached to the cutting blade mount 26 by means of a screw 50, a washer 52 and a nut 54. The shank of the screw 50 passes through the mounting apertures 48 in the cutting blade legs 38 and 40, and through the mounting aperture 35 of the cutting blade mount 26. The cutting blade legs 38 and 40 embrace the opposing sides of the cutting blade mount 26 and seat snugly in the blade seating pockets 32 defined in the opposing faces 28 and 30 of the cutting blade mount 26. In use, the blade 36 is tightly secured to the cutting blade mount 26 by means of the screw 50, washer 52, and nut 54, as illustrated in Figs. 3 and 4, for example. When the blade 36 is locked into position projecting from the cutting blade mount 26, which in turn projects from the mounting end 24 of the handle 20, the cutting hairpin bend portion 42 of the blade 36 forms a grooving tunnel 60 with the cutting blade mount 26, which is clearly illustrated in Fig. 3.

One unique feature of the grooving tool 10 is the planar guide fin 62 that projects longitudinally from the cutting blade mount 26 at an angled corner of the blade support mount 26. The angled corner from which the planar guide fin 62 projects forms flat floor contact surfaces 64 and 66 that are mutually coplanar with each other. The planar guide fin 62 is perpendicular to the floor contact surfaces 64 and 66 and is oriented parallel to and located midway between the opposing legs 38 and 40 of the cutting blade 36. The flat floor contact surfaces 64 and 66 are each preferably about three millimeters in length, measured in planes parallel to the guide fin 62, and about two millimeters in width, as measured in a plane perpendicular to the guide fin 62.

The axis of linear alignment of the blade mounting end 24 is indicated at 70 in Fig. 1. The floor contact surfaces 30 reside at an angle of about thirty degrees relative to the linear alignment axis 70 of the blade mounting end 24 of the handle 20. That is, the plane of the floor contact surfaces 64 and 66 is oriented at an angle of about thirty degrees relative to the axis of alignment 70 of the blade mounting end 24 and the cutting blade mount 26. The guide fin 36 projects outwardly from flat floor contact surfaces 64 and 66 on the cutting blade mount 26 formed at an angled corner of the cutting blade mount 26.

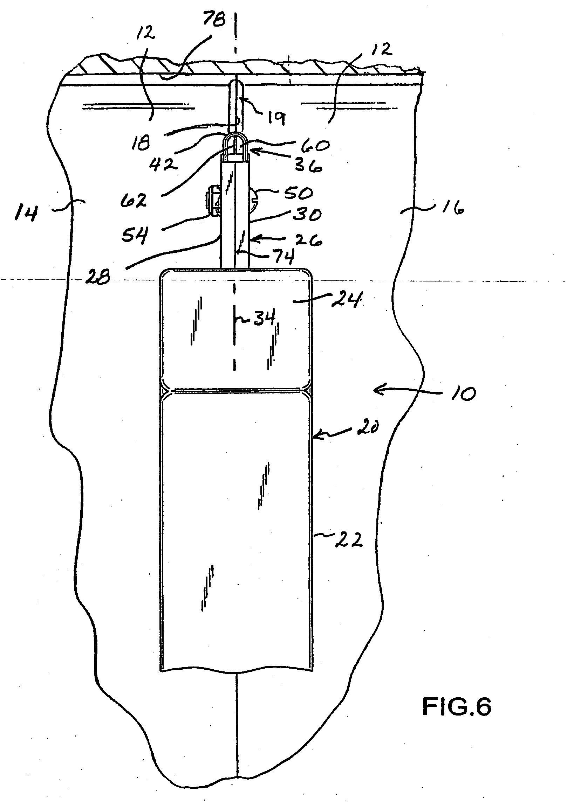

As illustrated in Figs. 1, 3, and 4, the guide fin 62 is located at the entrance to the grooving tunnel 60 and is oriented parallel to and midway between the opposing legs 38 and 40 of the cutting blade 36. The planar guide fin 62 is preferably no greater than about 0.5 millimeters in thickness and projects from the plane of floor contact defined by the floor contact surfaces 64 and 66 a distance of no greater than about three millimeters. As illustrated in Figs. 3 and 6, the guide fin 62 bisects the grooving tunnel 60 and resides in the longitudinal, bifurcating center plane 34 containing the axes of alignment 70 and 25 of the handle mounting end 24 and handgrip 22, respectively.

As shown in Figs. 3 and 6, the tunnel opening of the grooving tunnel 60 has a uniform cross section throughout. The tunnel opening of the grooving tunnel 60 is about three millimeters wide and about three millimeters high.

The handle 20 has an elbow bend in it delineating the handgrip 22 from the blade mounting end 24. The blade mounting end 24 projects from the handgrip 22 at an angle of about forty degrees from alignment relative thereto. That is, the alignment of the handgrip indicated by the axis of alignment 25 thereof intersects the axis of alignment 70 of the blade mounting end 24 at an angle of about forth degrees.

As a result, the handle 20 is bent so that the blade mounting end 24 thereof forms an obtuse angle of about one hundred fifty degrees on the top side of the handle 20 and a reflex angle of about two hundred ten degrees on the bottom side of the handle 20.

As illustrated in Figs. 1, 3, and 6, the cutting blade mount 26 is inscribed with a linear indicia 74 that longitudinally bisects the cutting blade mount 26 so as to provide a visual reference for alignment of the guide fin 62 with the linear interface 18 between the sheets of abutting flooring 14 and 16.

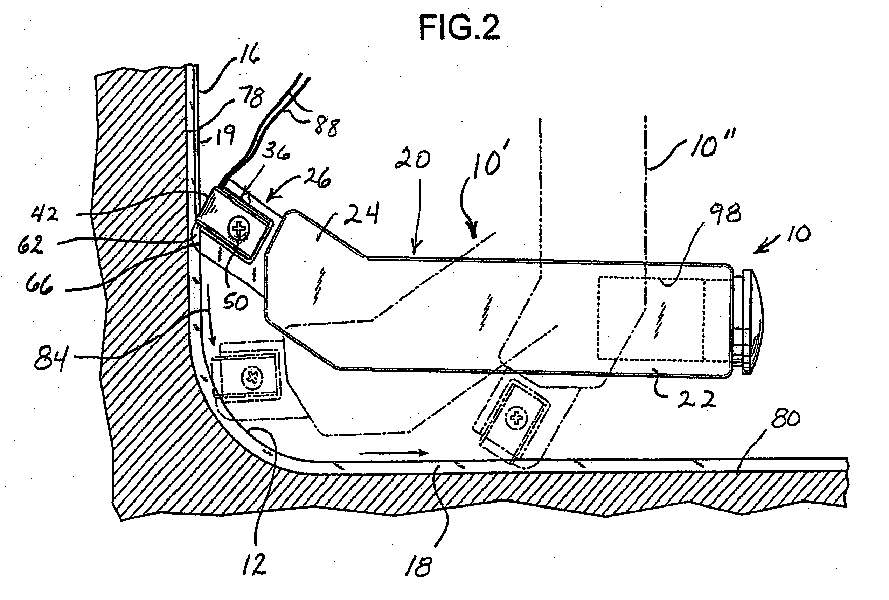

The grooving tool 10 is utilized to great advantage in cutting grooves in the coving surfaces 12 at the edges of the abutting sheets of flooring 14 and 16, as illustrated in Fig. 2. As shown in that drawing figure, the grooving tool 10 may typically be positioned with the cutting blade 36 located at the top of the coving section of abutting sheets of linoleum 14 and 16 on the wall surface 78 thereof a few centimeters above the floor surface 80. The handle 20 is oriented so that the obtuse angle of the top faces upwardly and the reflex angle of the bottom of the elbow bend thereof faces downwardly, as shown in Fig. 2.

The guide fin 62 is then inserted into the crevice 18 between the edges of the abutting sheets of flooring 14 and 16 and pushed against the flooring sheets 14 and 16 until the floor contract faces 64 and 66 of the angled corner of the cutting blade mount 26 reside in face to face contact with the exposed coving surfaces 12 of the sheets of flooring 14 and 16. That is, the floor contact surface 64 resides in direct contact and is pressed against the coving surface 12 of the floor sheet 16, while the floor contact surface 66 resides in direct contact and is pressed against the surface of the flooring sheet 14.

The tool 10 is then moved vertically down the wall 78 as indicated by the directional arrow 84. As the tool 10 is pushed downwardly the guide fin 62 travels in the crevice 18 between the abutting sheets of flooring 14 and 16 and with the floor contact surfaces 64 and 66 in face to face, intimate contact with the exposed coving surfaces 12 of the sheets of flooring 14 and 16. As illustrated in Fig. 2, the depth of penetration of the guide fin 62 into the crevice 18 is limited by the contact between the floor contact surfaces 64 and 66 and the exposed flooring coving surfaces 12 on either side of the guide fin 62.

As the tool 10 is pushed vertically downwardly against the wall 78, the grooving tunnel 60 of the cutting blade 36 gouges out a groove or channel 19 of generally semicircular cross section in the coving surfaces 12 of the floor sheets 14 and 16 to a uniform depth as determined by the projection of the hairpin bend portion 42 of the cutting blade 36 beyond the cutting blade mount 26. As the tool 10 is forced downwardly along the wall 78 as illustrated in Fig. 2, the user is able to maintain visual alignment between the inscribed indicia 74 on the cutting blade mount 26 and the crevice 18 between the flooring sheets 14 and 16. A groove 19 is thereby created at the flooring sheet interface of uniform depth and which precisely follows the interface between the flooring sheets 14 and 16. The inscribed indicia 74 formed lengthwise on the cutting blade mount 26 provides a visual reference that aids the user in holding the handle 20 in proper alignment and achieving a groove 19 of uniform depth throughout the interface between the sheets of flooring 14 and 16, particularly in the coving areas thereof.

As the tool 10 reaches the arcuate curve of the coving surfaces 12 of the sheets of flooring 14 and 16, the handgrip 22 of the handle 20 is to rotated upwardly in a counterclockwise direction, as indicated at 10' in Fig 2, in order to maintain the floor contact surfaces 64 and 66 flush against the flooring surfaces at the edges of the sheets of flooring 14 and 16. The elbow bend in the handle 20 facilitates observation of the cutting blade 36 by the user, which in turn facilitates maintaining linear alignment between the inscribed indicia 74. and the crevice 18 between the abutting edges of the flooring sheets 14 and 16.

As the tool 10 is moved through the coving area from a location pressed against the wall surface 78 to a location pressed against the floor surface 80, as indicated at 10" in Fig. 2, the handle 20 is rotated further upwardly in a counterclockwise direction to an almost vertical orientation, as illustrated at 10" in Fig. 2. This progressive rotation of the handgrip 22 from a substantially horizontal orientation at the top of the coving region to a substantially vertical orientation as the tool 10 is moved from a position in which it is pressed against the wall 78 to a position in which it is pressed against the floor 80, is necessary to maintain intimate contact between the floor contact surfaces 64 and 66 on either side of the planar guide fin 62 and the exposed coving surfaces 12 of the sheets of flooring 14 and 16.

As illustrated in Fig. 2, the orientation of the axis of alignment 70 of the blade mounting end 24 of the handle 20 relative to the coving surfaces 12 of the sheets of flooring 14 and 16 is always at an angle of about fifty-five degrees. This ensures a uniform depth of the channel-shaped groove 19 formed in the abutting edges of the flooring sheets 14 and 16. The guide fin 62 ensures that the cutting blade 36 properly follows the interface between the sheets of flooring 14 and 16, while the floor contact surfaces 64 and 66 ensure a uniform depth of cut by the grooving tunnel 60.

As illustrated in Fig. 2, since the guide fin 62 bisects the cutting tunnel 60 at the entrance thereto, the material from the surfaces 12 emanates as a pair of ribbons 88 from the exit end of the grooving tunnel 60. The ribbons 88 are simply discarded as the groove 19 is formed.

As is evident in Figs. 2 and 6, the unique configuration of the grooving tool 10 makes it ideal for following the curvature of the coving surfaces 12 and for achieving a uniform depth and alignment of the groove 19 created at the interface between the flooring sheets 14 and 16. The inscribed linear indicia 74 that extends about the cutting blade mount 26 facilitates maintenance of precise alignment of the handle 20 relative to the demarcation between the flooring sheets 14 and 16 delineated by the crevice 18 therebetween. The grooving tool 10 having the features depicted and described is much easier to utilize to create accurate grooves at the interface between flooring sheet 14 and 16, particularly in curved coving areas, as illustrated in Fig. 2, than conventional grooving tools.

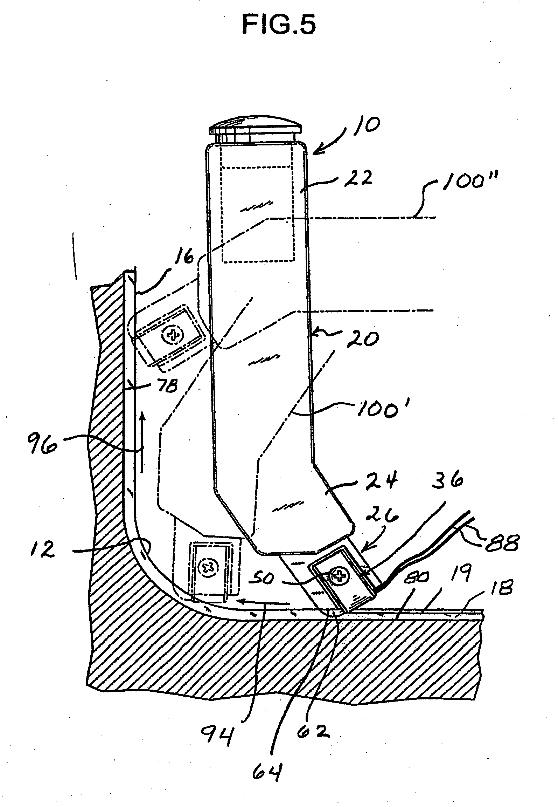

Some installers prefer to create grooves between seams of sheets of flooring 14 and 16 progressing through the coving region proceeding from the floor 80 forward and up the wall 78, rather than in the opposite direction shown in Fig. 2. Fig. 5 illustrates the use of the tool 10 in this reverse direction. That is, the tool 10 is used to form a groove 19 at the interface formed by the crevice 18 between sheets of flooring 14 and 16, commencing at the bottom of the coving, and proceeding up the wall 78 with the tool 10 held in the reverse direction, as illustrated in Fig. 5. As shown in that drawing figure the tool 10 is counterrotated from a position in which the handle 22 is in a nearly vertical orientation by pushing the blade 36 toward the wall 78, and up the wall 78, through the position indicated at 100', along the path 94, with continued clockwise rotation as the cutting blade 36 moves up the wall 78, along the path 96, whereupon the handgrip 22 assumes a hear horizontal orientation, as indicated at 100".

The choice of manner of use of the tool 10 as between the wall to floor groove formation shown in Fig. 2, or the floor to wall groove formation shown in Fig. 5, is largely a matter of personal choice among different flooring installers. The tool 10 is equally easy to use and provides uniform, high quality results when use either way.

Undoubtedly, numerous variations and modifications of the invention will become readily apparent to those persons familiar with the field of flooring installation and the design of tooling used for flooring installation. For example, as in conventional floor grooving tools, the tool 10 is provided with a hollow cavity 98 in its handle 20 for the purpose of storing spare blades 36. Other variations and modifications of the invention will also be readily apparent to individuals skilled in the flooring trades. Accordingly, the scope of the invention should not be construed as limited to the specific embodiment illustrated and described, but rather is defined in the claims appended hereto.

## Claims

1. A grooving tool for cutting grooves in the surfaces of abutting sheets of flooring at linear interfaces therebetween comprising:
a longitudinally aligned, elongated handle having a handgrip for manual gripping by a hand of a user and having a blade mounting end at one end of said handle,
a cutting blade mount projecting linearly from said blade mounting end of said handle and having opposing faces parallel to the alignment of said handle,
a cutting blade having a U-shaped cross section with opposing legs disposed against and secured to said opposing faces of said cutting blade mount, thereby defining a grooving tunnel between said cutting blade and said cutting blade mount, and
a planar guide fin located at said grooving tunnel and oriented parallel to and located midway between said opposing legs of said cutting blade.

2. A grooving tool according to Claim 1 wherein said planar guide fin longitudinally bisects one end of said grooving tunnel.

3. A grooving tool according to Claim 1 wherein said cutting blade is removably secured to said cutting blade mount.

4. A grooving tool according to Claim 1 wherein said cutting blade mount is inscribed with a linear indicia longitudinally bisecting its structure so as to provide a visual reference for alignment of said guide fin with said linear interfaces between said sheets of abutting flooring.

5. A grooving tool according to Claim 1 wherein said cutting blade mount has at least one angled corner to provide flat floor contact surfaces on said cutting blade mount on both sides of said guide fin so that said guide fin is insertable into said interfaces between said abutting sheets of flooring, whereupon said flat floor contact surfaces of said cutting blade mount reside in face to face contact with said surfaces of said abutting sheets of flooring.

6. A grooving tool according to Claim 1 wherein said handle is bent so that said blade mounting end thereof is aligned at an obtuse angle relative to said handgrip.

7. A grooving tool according to Claim 6 wherein said obtuse angle is about one hundred fifty degrees.

8. A floor covering grooving tool comprising:
a longitudinally oriented handle having a blade mounting end and a handgrip,
a flat blade mount projecting from said blade mounting end of said handle and having mutually opposing flat blade mounting faces,
a strip of metal having sharp edges and bent into a U-shaped configuration to form a cutting blade having mutually opposing legs mounted against said flat blade mounting faces of said blade mount to thereby form a U-shaped cutting tunnel with said blade mount, and
a flat, narrow guide fin secured to said blade mount at said U-shaped cutting tunnel and residing equidistant from said opposing legs of said cutting blade and in longitudinal alignment with said handle.

9. A grooving tool according to Claim 8 wherein said guide fin is located at one end of said cutting tunnel.

10. A grooving tool according to Claim 9 wherein said handle is bent so that said blade mounting end thereof forms an obtuse angle relative to one side of said handgrip and a reflex angle relative to an opposite side of said handgrip, and said guide fin is located on said blade mount nearest said opposite side of said handgrip.

11. A grooving tool according to Claim 10 wherein said cutting blade mount has an angled corner that defines flat floor contact surfaces on both sides of said guide fin, and said guide fin is oriented perpendicular to said floor contact surfaces and is centered therebetween.

12. A grooving tool according to Claim 11 wherein said floor contact surfaces define a plane of floor contact, and said cutting blade is firmly secured to said blade mount so that said cutting tunnel is inclined at an angle of about thirty degrees relative to said plane of floor contact.

13. A grooving tool according to Claim 12 wherein said guide fin is formed of steel and is no greater than about 0.5 millimeters in thickness and projects from said plane of floor contact a distance of no greater than about three millimeters.

14. A tool for forming grooves in coving at abutting upturned surfaces of sheets of flooring having edges that abut each other at a linear demarcation therebetween comprising:
a longitudinally aligned handle having a handgrip and a blade mounting end projecting from said handgrip,
a flat blade support mounting plate projecting longitudinally from said blade mounting end of said handle and having opposing, mutually parallel side faces,
a grooving blade formed into a U-shaped configuration with opposing legs respectively residing in contact with said opposing side faces of said blade support mounting plate, thereby forming a grooving tunnel with said blade support mounting plate, and
a flat, narrow guide fin secured to said blade support mounting plate immediately adjacent said grooving tunnel and oriented parallel to and equidistant from said opposing legs of said grooving blade.

15. A tool according to Claim 14 wherein said grooving tunnel has a tunnel opening of uniform cross section throughout and said tunnel opening is about three millimeters wide and about three millimeters high.

16. A tool according to Claim 15 wherein said handle has an elbow bend in it delineating said handgrip from said blade mounting end, and said blade mounting end of said handle projects from said handgrip at an angle of about forty degrees from alignment relative thereto.

17. A tool according to Claim 16 wherein said guide fin is located at an angled corner of said blade support mounting plate which forms flat floor contact surfaces that are in mutually coplanar alignment with each other and are perpendicular to said guide fin.

18. A tool according to Claim 17 wherein said floor contact surfaces reside at an angle of about thirty degrees relative to the alignment of said blade mounting end of said handle.

19. A tool according to Claim 17 wherein said guide fin defines a longitudinal, bifurcating center plane through said blade mount, and said blade mount is inscribed with linear indicia for following said bifurcating center plane so as to form a visual guide reference for aligning said handle relative to said demarcation between said sheets of flooring.
